# EUROPÄISCHE PATENTSCHRIFT

(11) **EP 2 085 636 B1**
(45) Veröffentlichungstag und Bekanntmachung des Hinweises auf die Patenterteilung: **11.05.2011**
(21) Anmeldenummer: 09150322.7
(22) Anmeldetag: 09.01.2009
(51) Int. Cl.: F16D 48/06

(54) **Vorrichtung und Verfahren zur Bestimmung des Schaltzustandes einer Bremse oder einer Kupplung**
Device and method for determining the switch state of a brake or coupling
Dispositif et procédé de détermination de l'état de commutation d'un frein ou d'un embrayage

(30) Priorität: 10.01.2008 DE 102008003783
(43) Veröffentlichungstag der Anmeldung: 05.08.2009
(73) Patentinhaber: Baumüller Nürnberg GmbH, 90482 Nürnberg (DE)
(72) Erfinder: Lemke, Peter, 91126 Schwabach (DE)
(74) Vertreter: Götz, Georg Alois

(56) Entgegenhaltungen:
- DE-A1- 19 510 519
- GB-A- 962 270
- JP-A- 61 109 920

## Beschreibung

Die Erfindung betrifft eine Vorrichtung zur Bestimmung des Schaltzustands einer mechanischen Kraftübertragungsvorrichtung, insbesondere Bremse oder Kupplung, die eine Steuer- und Auswerteeinheit umfasst. Des Weiteren betrifft die Erfindung ein Verfahren zum Betrieb einer solchen Vorrichtung.

In vielen Anwendungen, bei der Halte- oder Notbremsen für elektrische Antriebe zum Einsatz kommen, wird ein Signal benötigt, welches den tatsächlichen Schaltzustand der Bremse angezeigt. Bevorzugt werden in solchen Anwendungen Federspeicher-Scheibenbremsen oder Permanentmagnetbremsen mit elektromagnetischer Betätigung eingesetzt. Daneben existieren zahlreiche Anwendungen von elektromagnetisch betätigten Kupplungen, bei denen ebenfalls eine Signalisierung des Kupplungszustands benötigt wird.

Für die Ermittlung des Schaltzustands einer Bremse oder Kupplung sind aus dem Stand der Technik bereits verschiedene Verfahren bekannt, die in mehrere Kategorien eingeteilt werden können: Rein mechanische Verfahren, Wegmessungsverfahren, Verfahren, die Ströme und Spannungen der elektromagnetischen Bremse oder Kupplung analysieren bzw. Induktivitäten messen, temperaturbasierte Verfahren und letztlich auf kapazitiven oder piezoelektrischen Sensoren beruhende Verfahren.

Aus dem Stand der Technik beziehen sich die Druckschriften DE 2921032 B1, DE 10 2004 031 693 A1 und DE 10 2006 004 065 A1 alle auf Mittel zur Detektion des Öffnungszustandes von Bremsen oder Kupplungen. DE 2921032 B1 verwendet hierzu einen Magnetsensor, der ein magnetisches Streufeld erfasst(Spalte 1, Zeile 9ff). DE 10 2004 031 693 A1 verwendet einen Sensor, der die axiale Relativposition zweier rotierender Teile überwacht und diese drahtlos an eine Empfangseinheit übermittelt, die den Sensor induktiv mit Energie versorgt. Die axiale Relativposition wird dabei entweder mittels eines mechanischen Schalters (Absatz [0013]), mittels Veränderung der elektrischen Eigenschaften einer Spulenanordnung (Absatz [0011] und [0012]) oder mittles der Unterbrechnung der Signalübertragung zwischen Sensor und Transponder (Absatz [0010]) ermittelt. DE 10 2006 004 065 A1 verwendet zur Schaltzustandsdetektion einer elektromagnetisch betätigten Federspeicherbremse einen mit der Ankerplatte verbunden metallischen Stift, der mittels eines handelsüblichen induktiven Näherungssensors kleiner Hysterese abgetastet wird. In keiner der Druckschriften ist eine Detektion des Schaltzustandes einer Bremse oder Kupplung offenbart, die auf dem Eigenschwingungsverhalten des Betätigungsmagneten beruht. Alle angeführten Druckschriften beschreiben darüberhinaus Verfahren, die letztendlich auf einer Positionsmessung zweier zueinander beweglicher Bauteile beruhen.

In Bezug auf die rein mechanischen Vorrichtungen offenbart beispielsweise die DE 112005001108 T5 eine auf einer mechanischen Anzeige basierende Vorrichtung und ein Verfahren zur Feststellung der Position eines Scheibenbremsenaktuators, bei der manuell der Schaltzustand durch eine mechanische Anzeige ablesbar ist. In diesem Fall erfolgt jedoch keine elektrische Signalisierung und Verarbeitung des Schaltzustands.

Hiervon ausgehend können beispielsweise Schalter eine elektrische Signalisierung des Schaltzustands vornehmen. Das hierzu benötigte Signal wird mittels eines mechanischen Schalters erzeugt, der beispielsweise im Fall der elektromagnetisch betätigten Federspeicherbremse durch die Ankerscheibe der Bremse betätigt wird. Für eine zuverlässige Generierung des Schaltzustandssignals mittels eines Schalters muss der Schalter jedoch eine sehr kleine und konstante Schalthysterese besitzen. Hierbei wird eine zuverlässige Funktionen über eine lange Zeit hinweg dadurch erschwert, dass sich im Inneren der Bremse oder Kupplung bei wiederholten Betätigungsvorgängen Abrieb der Brems- oder Kupplungsbeläge und Gegenscheiben als feiner Staub ablagern und die Schaltkontakte und Mechanik des Schalters verschmutzen und schädigen.

Im Fall von Permanentmagnetbremsen ist der Einsatz eines mechanischen Schalters nicht oder nur mit großem Aufwand möglich, da die Ankerscheibe zugleich als Bremsscheibe fungiert und daher beim Bremsvorgang gegenüber dem Topfmagneten, an dem sie während des Bremsvorgangs anliegt, in Bewegung steht. Dadurch würde ein am Topfmagnete geführter Stift zur Betätigung des Schalters durch den Kontakt mit der rotierenden Ankerscheibe verschleißen, wodurch sich der Schaltpunkt über die Lebensdauer der Bremse so verstellen würde, dass eine zuverlässige Aussage über den Schaltzustands nicht mehr getroffen werden kann.

Neben der Bestimmung des Schaltzustands mithilfe mechanischer Schalter sind Verfahren, die den Schaltvorgang über Strom oder Spannungsverläufe am Elektromagneten auswerten, bekannt. Beispielsweise betrifft die Auslegeschrift DE 27 28 666 eine Einrichtung zur Überwachung eines Elektromagneten insbesondere für eine Kfz-Bremse, bei der eine Einrichtung die durch die Ankerbewegung hervorgerufenen Änderungen des Stromverlaufs bei Anlegen einer Spannung misst und abtastet. Diese Druckschrift stellt den Prototyp einer ganzen Reihe von Druckschriften dar, die auf der Auswertung der Spannungen/Ströme zur Bestimmung des Schaltzustandes von elektromagnetisch betriebenen Bremsen beruhen. Bei diesen Verfahren besteht der Nachteil darin, dass sie nur den Schaltvorgang an sich, nicht aber den bloßen Schaltzustand erkennen können. Zur Feststellung des Schaltzustands muss daher jede Zustandsänderung ab einem definierten Schaltzustand erfasst und gespeichert werden.

In diesem Zusammenhang existieren auch Verfahren, die mit elektrischen Testimpulsen versuchen, den Schaltzustand zu erkennen. In diesem Kontext sei exemplarisch auf die DE 20 2005 009 053 U1 hingewiesen, bei der zwei koaxial hintereinander angeordnete, den Tauchanker umgebende Tauchspulen dazu benutzt werden, durch Messung der Induktivitätsänderung einen Aufschluss über den Schaltzustand der Bremse zu geben. Diese Verfahren haben aber den Nachteil, dass sie abhängig von der Wicklungsauslegung des Elektromagneten und vor allem von der Sättigungskennlinie der im Magnetkreis eingesetzten Werkstoffe sind. Da diese Materialien in der Regel keine ausgewiesenen magnetischen Werkstoffe sind, stellen ihre magnetischen Eigenschaften nur typische Werte dar, die seitens des Herstellers dieser Werkstoffe weder spezifiziert noch garantiert werden. In Konsequenz müssen solche mit Testimpulsen arbeitenden Verfahren für jede einzelne Bremse oder Kupplung geeicht werden und können ihre Aussagekraft beispielsweise bei altersbedingter Veränderung der Materialeigenschaften verlieren.

Davon abweichend existieren Vorschläge, durch Überwachung der Temperatur einer Bremse oder Kupplung auf deren Schaltzustand zu schließen. So geht aus der DE 10 259 529 B4 ein Verfahren zur Ermittlung eines Bremszustands durch Analyse der Temperatur der Bremse hervor, dass durch Ermittlung eines Temperaturgradienten über eine bestimmte Zeit den Zustand der Bremse bestimmt. Jedoch weisen solche Verfahren eine hohe Trägheitszeit auf und verlieren bei häufig aufeinander folgender Betätigung der Bremse oder Kupplung aufgrund der permanenten Erhitzung der Bremse bzw. Kupplung ihre Aussagekraft. Daneben sind diese Vorrichtungen nicht in der Lage, im Stillstand eine Information über den Schaltzustand zu liefern.

Schließlich existieren mechanisch basierte Verfahren, die mittels eines indirekt arbeitenden Sensors auf Basis eines Kondensators oder Piezoelements den Schaltzustand einer Kupplung oder eine Bremse ermitteln. So offenbart die DE 10 2006 0132 16 A1 einen an einem Seilzug befestigten Piezo-Kraftmesser, der beim Spannen des Seilzugs zwischen zwei Anschlägen ein den Schaltzustand der Bremse anzeigendes Signal liefert. Daneben offenbart die DE 19 653 427 A1 einen kapazitiven Kraftsensor, der zwischen Aktuator und Bremsbacke eingesetzt wird und verschleißfrei durch Veränderung der Kapazität Aufschluss über den Schaltzustand der Bremse gibt. Letztlich zeigt die EP 09 430 61 B1 eine elektromechanisch betriebene Bremse mit einem als Dehnungsmessstreifen ausgebildeten Kraftmesssensor, der ebenfalls zwischen Aktuator und Bremssattel angeordnet ist und ein durch Druck oder Zug der Bremsbacken generiertes Signal verwendet, um den Bremsenzustand zu ermitteln. Auch diese Verfahren weisen jedoch die Probleme mechanisch basierter Verfahren, insbesondere Abnutzung, Verunreinigung und hohe Fehleranfälligkeit auf. Daneben sind die oben aufgeführten Verfahren nur in der Lage, eine Schaltzustandsänderung und nicht den statischen Zustand der Bremse oder Kupplung zu detektieren, so dass eine Zustandsspeicherung, d.h. ein Gedächtnis der Zustandserkennungsvorrichtung notwendig wird.

Die JP 61 109920 A betrifft ein Verfahren und eine Vorrichtung zum Erkennen der Verbindung einer Reibkupplung. Das Erkennen erfolgt mittels Schwingungssensoren in Form von piezoelektrischen Elementen. Die piezoelektrischen Elemente dienen, um den Zeitpunkt der Verbindung der Reibkupplung festzustellen. Die Vorrichtung gemäß JP 61 109920 A dient also lediglich dazu, den Schaltzeitpunkt der Reibkupplung detektieren, indem Vibrationen durch die Schwingungssensoren erfasst werden.

Ausgehend von diesem Stand der Technik ist es Aufgabe der vorliegenden Erfindung, ein Verfahren und eine Vorrichtung zur Bestimmung des Schaltzustands einer mechanischen Kraftübertragungsvorrichtung vorzuschlagen, die die oben angesprochenen Probleme des Stands der Technik überwindet.

Diese Aufgabe wird durch eine Vorrichtung nach dem Patentanspruch 1 und durch ein Verfahren nach dem Patentanspruch 13 gelöst. Vorteilhafte Ausgestaltungen der Erfindung sind Gegenstand der Unteransprüche.

Die erfindungsgemäße Lösung der Eigenschwingungsanalyse beruht auf einer Veränderung des Systemsverhaltens, die sich erst bei einer direkten Berührung der beiden zueinander beweglichen Bauteile ergibt, wenn die Druckkraft auf die Berührfläche so groß ist, dass sich die beiden Bauteile hinsichtlich der ersten Eigenformen ihrer Eigenschwingung wie ein Körper verhalten.

Die erfindungsgemäße Vorrichtung zur Bestimmung des Schaltzustands einer mechanischen Kraftübertragungsvorrichtung umfasst zumindest einen Schwingungserreger, zumindest einen Schwingungssensor und eine Steuer- und Auswerteeinheit. Hierzu sind der Schwingungserreger und der Schwingungssensor an einem spezifischen Schwingungskörper der mechanischen Kraftübertragungsvorrichtung angeordnet. Der Schwingungskörper zeichnet sich dadurch aus, dass je nach Schaltzustand der Kraftübertragungsvorrichtung (z.B. Bremse offen/geschlossen, Kupplung gekuppelt/entkuppelt) das Schwingungsverhalten (mechanische Eigenfrequenzverteilung und/oder Dämpfungscharakteristik) des Schwingungskörpers signifikant beeinflusst wird. Die Steuer- und Auswerteeinheit ist zur Bestimmung des Schaltzustands so mit dem Schwingungserreger und dem Schwingungssensor elektrisch verbunden, dass der Schwingungserreger durch die Steuer- und Auswerteeinheit in mechanische Schwingungen versetzt wird und hierdurch den Schwingungskörper anregt, und die von dem Schwingungssensor aufgenommenen mechanischen Schwingungen des Schwingungskörpers zur Beurteilung des Schaltzustands aufgenommen und von der Steuer- und Auswerteeinheit verarbeitet werden. Mit anderen Worten beruht die erfindungsgemäße Vorrichtung darauf, dass an einem Schwingungskörper der Kraftübertragungsvorrichtung, die in der Regel eine Bremse oder eine Kupplung ist, ein Schwingungserreger und Schwingungssensor angeordnet ist. Dabei kann der Schwingungserreger bei Anregung durch die Steuer- und Auswerteeinheit einen mechanischen Impuls oder eine mechanische Schwingung auf den Schwingungskörper übertragen. Der Schwingungskörper ist beispielsweise im Fall einer Bremse der Bremsenaktuator mit dem elektrischen Bremsenmagneten. Wird die Schaltzustandsbestimmungsvorrichtung in einer Kupplung eingesetzt, so besteht der Schwingungskörper entweder aus dem Verbund Kupplungsaktuator mit Elektromagnet und gelagerter erster Kupplungsscheibe bzw. aus der ersten Kupplungsscheibe. Wesentlich dabei ist, dass der Schwingungskörper in Abhängigkeit des Schaltzustands der Kraftübertragungsvorrichtung verschiedene Eigenfrequenzen und ein anderes Dämpfungsverhalten aufweist. Dies kann beispielsweise dadurch geschehen, dass er am Eisenrückschluss eines als Topfmagneten eines Elektromagneten, der die Kupplung oder Bremse betätigt, angeordnet ist und somit bei geschlossenem Eisenschluss eine andere Schwingungscharakteristik als bei unterbrochenem Eisenschluss aufweist. Hierzu verbindet eine Druckvorspannungseinrichtung den Schaltzustandssensor kraftschlüssig mit dem Schwingungskörper, und dient zur Aufrechterhaltung einer Druckvorspannung auf den Verbund aus Schwingungserreger und Schwingungssensor. Die Vorrichtung zur Aufrechterhaltung der Druckvorspannung dient dazu, die Schwingungen des Schwingungserregers auf den Schwingungskörper, in diesem Fall den Topfmagneten zu übertragen, bzw. dessen Eigenschwingungen zuverlässig an den Schwingungssensor weiterzuleiten. Zur Detektion des Schaltzustandes wird der Topfmagnet durch den Schwingungserreger zu Eigenschwingungen angeregt. Im Anschluss daran werden die mechanischen Eigenfrequenzen und eventuell deren zeitliches Abklingverhalten durch den Schwingungssensor in ein elektrisches Signal umgewandelt, welches an die Steuer- und Auswerteeinheit weitergeleitet und dort verarbeitet wird, um das Bremsen-Schaltzustandssignal zu erzeugen. Der Schaltzustand wird dadurch erkannt, dass sich, je nach dem, ob die Ankerscheibe am Topfmagneten anliegt oder nicht, die mechanischen Eigenfrequenzen und eventuell die Dämpfung des Topfmagneten bzw. des Verbundes Topfmagnet und Ankerscheibe voneinander unterschieden. Die Vorrichtung ist auch bei einer Permanentmagnetbremse mit rotierender Ankerscheibe einsetzbar, da sich auch in diesem Fall eine Veränderung der Eigenfrequenz- und Dämpfungscharakteristik der mechanischen Teile bei verschiedenen Schaltzuständen ergibt. Somit ermöglicht die Vorrichtung eine indirekte und verschleißfreie Detektion des Schaltzustands durch Analyse gesteuert angeregter Eigenfrequenzen. Als Referenz können beispielsweise in einem Speicher der Steuer- und Auswerteeinheit abgelegt Eigenfrequenzen oder Frequenzspektren dienen, so dass es denkbar ist, dass bei Abweichung von den beiden zuvor gespeicherten "Idealspektren" eines geschlossenen und offenen Eisenkreises Rückschluss auf den Verschleißzustand der Kraftübertragungsvorrichtung gezogen werden können.

Erfindungsgemäß kann die Vorrichtung ohne makroskopisch bewegte Elemente verschleißfrei und störsicher arbeiten, und unabhängig von eingesetzten Werkstoffen und Auslegung des Elektromagneten sein. Die Erfindung eröffnet die Möglichkeit, auch schnell hintereinander folgende Schaltvorgänge sicher anzuzeigen, und den Schaltzustand ohne Kenntnis der Vorgeschichte zu detektieren. Das Verfahren und die Vorrichtung nach der Erfindung ermöglichen eine indirekte Bestimmung des Schaltzustands von Bremsen und Kupplungen selbst unter schwierigen Einsatzbedingungen und machen daneben den Verschleißgrads der Kraftübertragungsvorrichtung bestimmbar. Die Vorrichtung und das Verfahren nach der Erfindung sind universell und unabhängig von Aufbau, Art und Auslegung der Bremse oder Kupplung einsetzbar.

In einem besonderen Ausführungsbeispiel ist die mechanische Kraftübertragungsvorrichtung eine Bremse oder eine Kupplung. Insbesondere bei der Ausbildung der mechanischen Kraftübertragungsvorrichtung als Bremse oder Kupplung unterscheidet sich das mechanische Eigenfrequenzspektrum und die Dämpfungscharakteristik aufgrund der zueinander geführten bzw. voneinander getrennten Massen (Bremsscheibe / Bremsbacke bzw. Kupplungsscheiben) in beiden Schaltzustellungen signifikant. Jedoch sind weitere Anwendungsgebiete der Erfindung denkbar, und zwar immer dann, wenn prinzipiell bei möglichen Schaltstellungen verschiedene mechanische Eigenfrequenzen innerhalb der Vorrichtung registriert werden können.

Vorteilhafterweise ist die mechanische Kraftübertragungsvorrichtung elektromagnetisch betätigbar und umfasst hierzu mindestens einen Elektromagneten. Elektromagnetisch betätigte Kraftübertragungsvorrichtungen beruhen auf dem Prinzip des Schließens eines die magnetischen Feldlinien führenden Eisenkreises, so dass die mechanische Verstimmung des Frequenzspektrums aufgrund eines geöffneten oder geschlossenen Eisenkreises signifikant ist. Daneben sind solche Kraftübertragungsvorrichtung bereits mit elektrischen Betriebsmitteln, insbesondere Elektromagneten ausgerüstet, so dass Versorgungsenergie sowie Übertragungsleitungen bereits vorhanden sind.

Ist die Kraftübertragungsvorrichtung elektromagnetisch betätigbar, so liegt es vorteilhaft nahe, dass sie einen Topfmagneten umfasst, wobei der spezifische Schwingungskörper im Bereich des Eisenschlusses des Topfmagneten liegt. Wie bereits weiter oben angedeutet eignet sich der Eisenrückschluss eines Topfmagneten hervorragend zur Anbringung des Schwingungssensors und Schwingungserregers, wobei mindestens eine Druckvorspannungseinrichtung den Schwingungserreger aber auch den Schwingungssensor kraftschlüssig mit dem Schwingungskörper verbindet.

Grundsätzlich können der Schwingungserreger und der Schwingungssensor beliebig aufgebaut sein. Beispielsweise sind elektromagnetische Erreger, induktive oder kapazitive Sensoren einsetzbar. In einem besonders ausgezeichneten Ausführungsbeispiel sind das Schwingungserregungselement und/oder der Schwingungssensor als Piezoelement ausgebildet. Dabei ist es des Weiteren besonders vorteilhaft und nahe liegend, dass das Piezoelement als Schaltzustandssensor, d.h. als Kombination von Schwingungserreger und Schwingungssensor, dient, so dass zunächst das Piezoelement zu Schwingungen angeregt wird, und anschließend die Schwingungen durch dasselbe Piezoelement gemessen werden. Ein Piezoelement ist ein Bauteil, das den Piezoeffekt ausnützt, um entweder durch Anlegen einer elektrischen Spannung eine mechanische Bewegung auszuführen (Piezoerreger, verwendet den so genannten inversen Piezoeffekt), oder bei Einwirkung einer mechanischen Kraft eine elektrische Spannung zu erzeugen (Piezosensor). Zum Einsatz in der Schaltzustandserkennungsvorrichtung umfasst das Piezoelement einen Körper aus Piezokeramik mit Anschlusselektroden, eine Gegenmasse, und ist in einer Vorrichtung zur Aufrechterhaltung einer Druckvorspannung in dem piezokeramischen Körper eingespannt und mit dem Schwingungskörper verbunden. Die Druckvorspannungseinrichtung kann beispielsweise durch eine Stahlfeder oder eine Schraubenverbindung realisiert werden. Piezoelemente sind überaus günstig und weisen hervorragende Eigenschaften zur Anregung und Detektion von Eigenfrequenzen in mechanischen Vorrichtungen auf. Daneben ermöglichen sie den Anschluss des Erregers und Sensors mithilfe von nur einer zweiadrigen - bzw. einadrigen Anschlussleitung - sofern der Körper der Kraftübertragungsvorrichtung die Gegenmasse bildet.

Gemäß einer weiteren Auslegung umfasst die Steuer- und Auswerteeinheit eine Schwingungserzeugungseinheit und eine Schwingungsanalyseeinheit. Die Steuer- und Auswerteeinheit erzeugt in der Schwingungserzeugungseinheit einen elektrischen Impuls, der gegebenenfalls eine gewisse Bandbreite aufweist und mit der Eigenfrequenz der Kraftübertragungsvorrichtung im geöffneten und geschlossenen Zustand abgestimmt ist. Die Schwingungsanalyseeinheit nimmt die elektrischen Schwingungssignale des Schwingungssensors auf, analysiert diese und erkennt aus spezifischen Frequenzanteilen oder dem gesamten Frequenzspektrum oder der Dämpfungscharakteristik den Schaltzustand der Kraftübertragungsvorrichtung. Beispielsweise kann die Schwingungserzeugungseinheit einen VCO zur Erzeugung einer spezifischen elektrischen Anregungsfrequenz und die Schwingungsanalyseeinheit einen A/D-Wandler mit Mikrocontroller umfassen, der eine FFT oder DFT der Sensorsignale ausführt und durch Frequenzbereichsanalyse oder spezifischen digitalen Filtern charakteristische Frequenzkomponenten der mechanischen Kraftübertragungsvorrichtung, die den Schaltzustand anzeigen, detektieren. Des weiteren ist denkbar, dass die Schwingungsanalyseeinheit einen Speicher umfasst, der Informationen über "ideale Frequenzspektren" der Kraftübertragungsvorrichtung beider Schaltzustände umfasst, so dass bei Abweichungen von diesen Spektren der Verschleißzustand oder eine Fehlfunktion erkannt werden kann.

An obige Auslegung angelehnt und vorteilhaft weiterentwickelt umfasst die Schwingungsanalyseeinheit des weiteren Mittel zur Bestimmung der Abweichung einzelner Schwingungsfrequenzen bzw. eines Frequenzspektrums. Diese Mittel können durch typische digitale Signalverarbeitungsbausteine wie A/D-Wandler, Mikrocontroller etc. realisiert sein, oder analoge aktive oder passive RLC-Filterstrukturen beinhalten, die typische Eigenfrequenzen filtern und so den Schaltzustand anzeigen.

Eine vorteilhafte Weiterentwicklung des obigen Ausführungsbeispiels liegt darin, dass die Schwingungsanalyseeinheit in Verbindung mit der Schwingungserzeugungseinheit steht, und die Anregungsfrequenz der Schwingungserzeugungseinheit steuert. Hierdurch weist die Vorrichtung die Möglichkeit auf, aufgrund des Ergebnisses der durch die Schwingungsanalyseeinheit durchgeführten Frequenzanalyse die Frequenz des durch die Schwingungserzeugungseinheit stimulierten mechanischen Impulses nachgeführt wird, um beispielsweise einer Verschiebung des Eigenfrequenzspektrums z.B. durch Abnutzung oder Verschleiß Rechnung zu tragen.

Es ist besonders vorteilhaft, dass die Schwingungsanalyseeinheit neben einem Mittel zur Signalisierung des Schaltzustands mindestens ein weiteres Mittel zur Signalisierung des Abnutzungsgrads der mechanischern Kraftübertragungsvorrichtung umfasst. Wird durch die Schwingungsanalyseeinheit eine Veränderung der spezifischen Eigenfrequenzen oder eine Verschiebung des Eigenfrequenzspektrums erkannt, so kann auf einen gewissen Abnutzungsgrad der Kraftübertragungsvorrichtung geschlossen werden, der durch die Signal und Auswerteeinheit nach außen signalisiert wird.

In einem ausgezeichneten Ausführungsbeispiel sind der Schwingungserreger und/oder der Schwingungssensor über die Zuleitungen der Elektromagnete mit der Steuer- und Auswerteeinheit verbunden. Somit werden zusätzliche Ansteuerleitungen für den Schaltzustandssensor überflüssig.

Das erfindungsgemäße Verfahren zur Bestimmung des Schaltzustands einer mechanischen Kraftübertragungsvorrichtung unter Verwendung einer Vorrichtung nach den vorangegangenen Ansprüchen arbeitet nach folgenden Schritten:
- in einem ersten Schritt regt die Steuer- und Auswerteeinheit den Schwingungserreger so an, dass der Schwingungskörper mechanisch in Schwingungen versetzt wird;
- in einem zweiten Schritt misst die Steuer- und Auswerteeinheit die Schwingungen des Schwingungssensors;
- in einem dritten Schritt bestimmt die Steuer- und Auswerteeinheit das Eigenfrequenzspektrum der Schwingungen bestimmt;
- und in einem vierten Schritt bestimmt die Steuer- und Auswerteeinheit auf Basis des Frequenzspektrums den Schaltzustand der Kraftübertragungsvorrichtung und signalisiert diesen.

Somit nutzt das Verfahren eine Ausführungsform der erfindungsgemäßen Vorrichtung, in dem ein mechanischer Impuls, der von der Steuer- und Auswerteeinheit durch elektrische Ansteuerung des Schwingungserregers ausgelöst und von dem Schwingungserreger auf den Schwingungskörper der Kraftübertragungsvorrichtung übertragen wird, Eigenfrequenzen des Schwingungskörpers anregt. Diese Eigenfrequenzen werden von dem Schwingungssensor gemessen und von der Steuer- und Auswerteeinheit aufgenommen und analysiert. Hierbei entscheidet die Steuer- und Auswerteeinheit aufgrund charakteristischer Eigenfrequenzen, der Lage und des Aufbaus des Frequenzspektrums oder der Dämpfungscharakteristik der Schwingungen über den Schaltzustand der Bremse oder Kupplung.

In einer vorteilhaften Ausführung des Verfahrens stellt die Steuer- und Auswerteeinheit in einem weiteren Schritt aufgrund einer Abweichung des Frequenzspektrums von einem Referenzfrequenzspektrum den Verschleißgrad der Kraftübertragungsvorrichtung fest und signalisiert diesen nach außen. So ist beispielsweise eine Verschiebung des Frequenzspektrums, die durch Ablagerung und Verschmutzung verursacht wird, ein zuverlässiges Indiz über den Verschleißgrad einer Bremse oder Kupplung.

Insofern die Kraftübertragungsvorrichtung elektromagnetisch betätigt wird, ist es vorteilhaft möglich, dass die Steuer- und Auswerteeinheit unter Berücksichtigung des Betriebszustands des Elektromagnets und des Ergebnisses der Beurteilung des Schaltzustands der Kraftübertragungsvorrichtung ein Warnsignal ausgibt. Insbesondere bei Betätigung der Kraftübertragungsvorrichtung mittels eines Elektromagneten kann durch Kenntnis des Bestromungszustands des Elektromagneten und der Messung des Frequenzspektrums ein Fehlverhalten der Kraftübertragungsvorrichtung erkannt werden. So ist beispielsweise bei einem bestromten Zustand des Elektromagneten, d.h. bei angezogener Bremse und einem Signal des Schaltzustandssensors, das darauf hin deutet, dass die Bremse nicht angezogen ist, davon auszugehen, dass eine Fehlfunktion der Bremse vorliegt, so dass ein Warnsignal ausgegeben wird.

Im Nachfolgenden wird die Erfindung anhand lediglich Ausführungsbeispiele zeigender Zeichnungen näher erläutert.

Es zeigen:
Fig. 1: in schematischer Darstellung von Schaltzustandssensoren zweier Ausführungsbeispiele;
Fig. 2: Schnittdarstellung eines Ausführungsbeispiels einer elektromagnetischen Bremse mit Schaltzustandssensor im offenen und geschlossenen Zustand;
Fig. 3: Schnittdarstellung eines Ausführungsbeispiels einer elektromagnetischen Kupplung mit Schaltzustandssensor im offenen und geschlossenen Zustand;
Fig. 4: ein Ablaufdiagram eines Ausführungsbeispiels des erfindungsgemäßen Verfahrens.

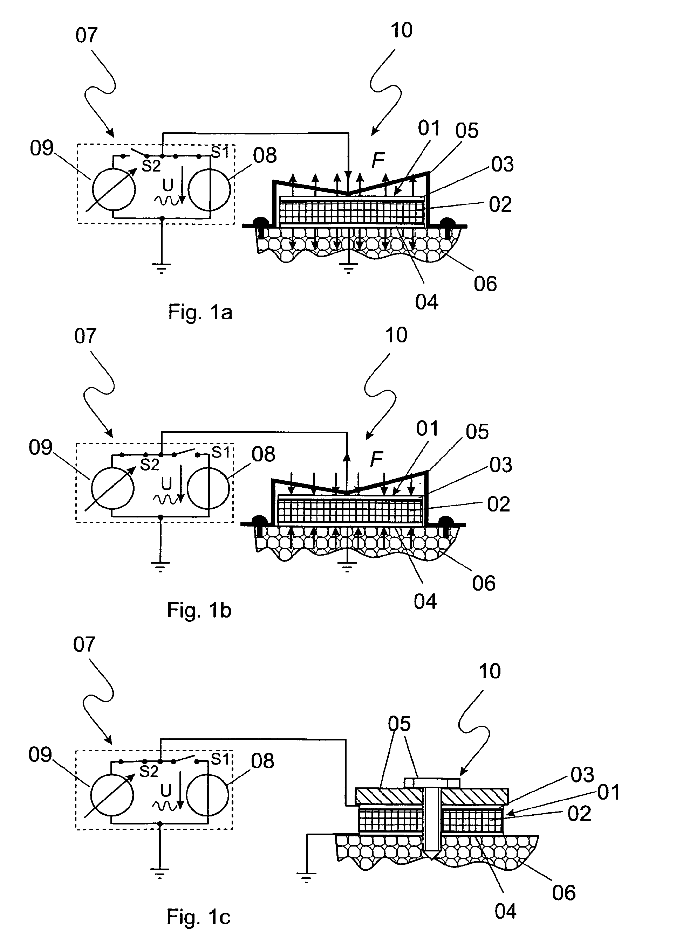

Fig. 1 zeigt ein als Piezoelement 01 ausgeführten Schaltzustandssensor 10 im Einsatz als Schwingungserreger nach Fig. 1a und Schwingungssensor nach Fig. 1b mit einer als Druckfederklammer ausgeführten Druckvorspannungseinrichtung 05 und in Fig. 1c mit einer als Schraubenverbindung ausgeführten Druckvorspannungseinrichtung 05. Das Piezoelement 01 umfasst einen Piezokeramikkörper 02 und eine Anschlusselektrode 03, die über eine Steuer- und Sensorleitung mit einer Steuer- und Auswerteeinheit 07 verbunden ist. Des Weiteren umfasst das Piezoelement 01 eine Gegenelektrode 04, die mit dem leitfähigen Material des Schwingungskörpers 06 der Kraftübertragungsvorrichtung verbunden ist und gleichzeitig die Masse der Schaltung darstellt. Damit das Piezoelement 01 mechanische Impulse auf den als Gegenmasse dienenden Schwingungskörper 06, der ein Bremsenaktuator oder der ruhende Teil einer Kupplung sein kann, übertragen und aufnehmen kann, ist es durch eine Druckvorspannungseinrichtung 05 kraftschlüssig mit der als Gegenmasse dienenden Schwingungskörper 06 verbunden. Diese Druckvorspannungsvorrichtung 05 ist beliebig realisierbar und soll lediglich sicherstellen, dass das Piezoelement 01 kraftschlüssig mit dem Schwingungskörper 06, der beispielsweise ein Bremsenaktuator oder ein Kupplungsaktuator sein kann, verbunden ist. In den Figuren 1a und 1b besteht die Druckvorspannungseinrichtung 05 aus einer Druckfederklammer, die mittels zweier Schrauben, Nieten oder einer Schweißverbindung am Schwingungskörper 06 befestigt ist, und durch deren Federwirkung das Piezoelement 01 kraftschlüssig auf die Oberfläche des Schwingungskörpers 06 gepresst wird. In Fig. 1c ist eine alternative Druckvorspannungseinrichtung 05 mittels einer Zentralschraube durch das Piezoelement 01 und einer beispielsweise als Beilagscheibe ausgeführten Druckübertragungsplatte dargestellt. Zur Befestigung des Schaltzustandssensors ist somit lediglich die Anfertigung eines Gewindelochs am Schwingungskörper 06 notwendig, außerdem kann der Anpressdruck des Piezoelements 01 am Schwingungskörper 066 durch Variation des Schraubenspannkraft variiert und nachgestellt werden.

Die Steuer- und Auswerteeinheit 07 umfasst eine als Frequenzspannungsquelle dargestellte Schwingungserzeugungseinheit 08, die ein elektrisches Signal in einem bestimmten Frequenzbereich, gegebenenfalls überlagert durch ein Gleichspannungssignal liefert. Des Weiteren umfasst die Steuer- und Auswerteeinheit 07 eine Schwingungsanalyseeinheit 09, die die über die Signal-Sensorleitung zurückgeleiteten Sensorsignale des Piezoelements 01 bei geschlossenem Schalter S2 aufnimmt und verarbeitet.

Wie in Fig. 1a dargestellt, wird durch Schließen des Schalters S1 und Öffnen des Schalter S2 das Piezoelement 01 durch die Schwingungserzeugungseinheit mit dem elektrischen Schwingungserregungssignal stimuliert und zur Erzeugung eines mechanischen Impulses angeregt. Dieser durch Kraftpfeile angedeutete mechanische Impuls wird je nach Vorzeichen über die Druckvorspannungseinrichtung 05 oder über das Piezoelement 01 selbst auf den beispielsweise als Bremsenaktuator ausgebildeten Schwingungskörper 06 der Kraftübertragungsvorrichtung geleitet und regt diesen zu mechanischen Schwingungen an, wodurch sich die Eigenfrequenzen des angeregten mechanischen Systems ausbilden.

Wird nun, wie in Fig. 1b gezeigt, der Schalter S1 geöffnet und der Schalter S2 geschlossen, so werden die vom Piezoelement 01 aufgenommen Eigenschwingungen des angeregten mechanischen Systems (des Schwingungskörpers 06 mit Schaltzustandssensor 10) der Schwingungsanalyseeinheit 09 zugeleitet, dort verarbeitet und hiernach der Schaltzustand der Kraftübertragungsvorrichtung erkannt.

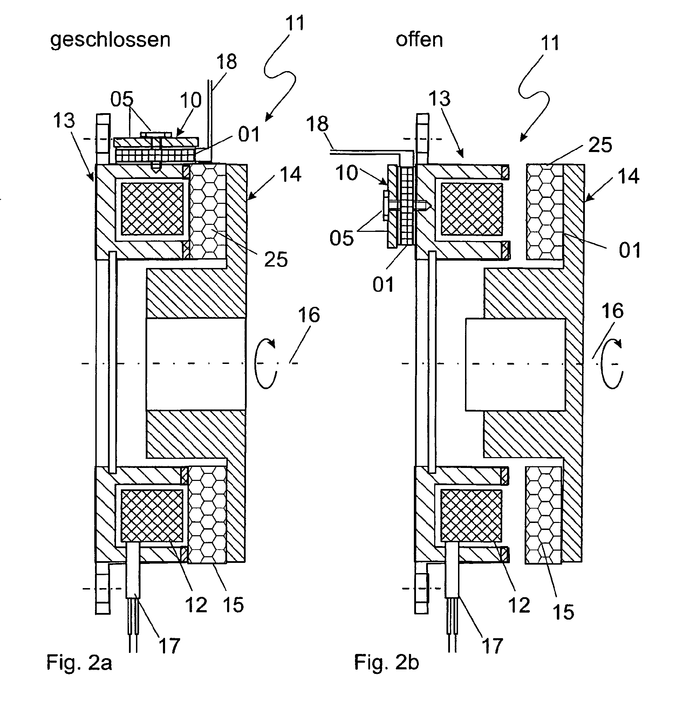

Fig. 2 stellt einen Schnitt durch eine elektromagnetische Bremse 11 dar. Die Bremse 11 umfasst mindestens einen Elektromagneten 12, der in einem Bremsenaktuator 13 eingebettet ist. Der Bremsenaktuator 13 stellt dabei den ruhenden Teil der Bremse 11 dar. Am Bremsenaktuator 13 ist ein Schaltzustandssensor 10 angeordnet, der kraftschlüssig durch eine als Schraubenverbindung ausgebildete Druckvorspannungseinrichtung 05 mit dem Bremsenaktuator 13 verbunden ist. Des Weiteren weist der Bremsenaktuator 13 einen ringförmigen Elektromagneten 12 auf. Der Eisenrückschluss des als Topfmagneten ausgebildeten Systems aus Bremsenaktuator 13 und Elektromagneten 12 wird durch die axial zum Bremsenaktuator 13 verschieblichen rotierende Einheit 14 gebildet. Der Elektromagnet 12 ist durch eine Zuleitung 17 mit einer nicht dargestellten Steuereinheit der Bremse 11 verbunden und wird durch diese zum Öffnen und Schließen der Bremse 11 mit Spannung versorgt. Zur Ansteuerung und Ableitung der Sensorsignale weist der Schaltzustandssensor 10 eine Piezoelement-Anschlussleitung 18 auf, die mit einer nicht dargestellten Steuer- und Auswerteeinheit verbunden ist. Axial gegenüber dem als Elektromagnettopf ausgebildeten Bremsenaktuators 13 ist auf der drehenden Welle eine rotierende Einheit 14 angeordnet, die um eine Drehachse 16 dreht. Dabei weist die rotierende Einheit 14 ein axiales Spiel auf, so dass in dem in Fig. 2a dargestellten bestromten Zustand des Elektromagneten 12 die rotierende Einheit zum Schließen des magnetischen Eisenkreises an den Bremsbelag 15 des Bremsenaktuators 13 herangezogen wird. Dadurch wird der Eisenrückschluss 25, der durch den Bremsbelag 15 gebildet wird, geschlossen. Im geschlossenen Zustand wird die Gesamtmasse des Schwingungskörpers 06 aus dem Bremsenaktuator 13 und der rotierenden Einheit 14 gebildet, so dass der Schwingungskörper 06 durch Anregung mit einem kurzen mechanischen Impuls durch den Schaltzustandssensor 10 eine hohe Schwingungsdämpfung und niedrige Eigenfrequenzen aufweisen wird.

In Fig. 2b ist die Bremse 11 in einem geöffneten Zustand dargestellt, der sich im unbestromten Zustand des Elektromagneten 12 einstellt. In diesem Fall wird die rotierende Einheit 14 durch Federkräfte vom Bremsenaktuator 13 axial entfernt und die Bremse ist offen. In diesem Fall besteht der Schwingungskörper 06 lediglich aus dem Bremsenaktuator 13, der eine geringe Masse gegenüber dem geschlossenen Zustand, bei dem der Schwingungskörper 06 aus Bremsenaktuator 13 und rotierender Einheit 14 besteht, aufweist. Im offenen Zustand misst der Schaltzustandssensor 10 demzufolge höhere Eigenfrequenzen und eine geringere Schwingungsdämpfung, so dass durch diese Unterschiede der Schaltzustand der Bremse 11 durch die nicht dargestellte Steuer- und Auswerteeinheit erkannt werden kann.

Wird im geschlossenen Zustand der Fig. 2a oder im geöffneten Zustand der Fig. 2b der Schaltzustandssensor 10 mit einem elektrischen Impuls stimuliert, so regt er Eigenschwingungen im Eisenrückschluss des Topfmagneten des Bremsenaktuators 13 an, die je nach Schaltzustand verschiedene Eigenfrequenzen, Frequenzspektren und Dämpfungscharakteristiken aufweisen. Aufgrund der schaltzustandsabhängigen unterschiedlichen Signale des Schaltzustandssensors 10 als Impulsantwort des mechanischen Impulses kann eine geeignete analoge oder digitale Signalverarbeitung den Schaltzustand der Bremse 11 sicher und verschleißfrei detektieren.

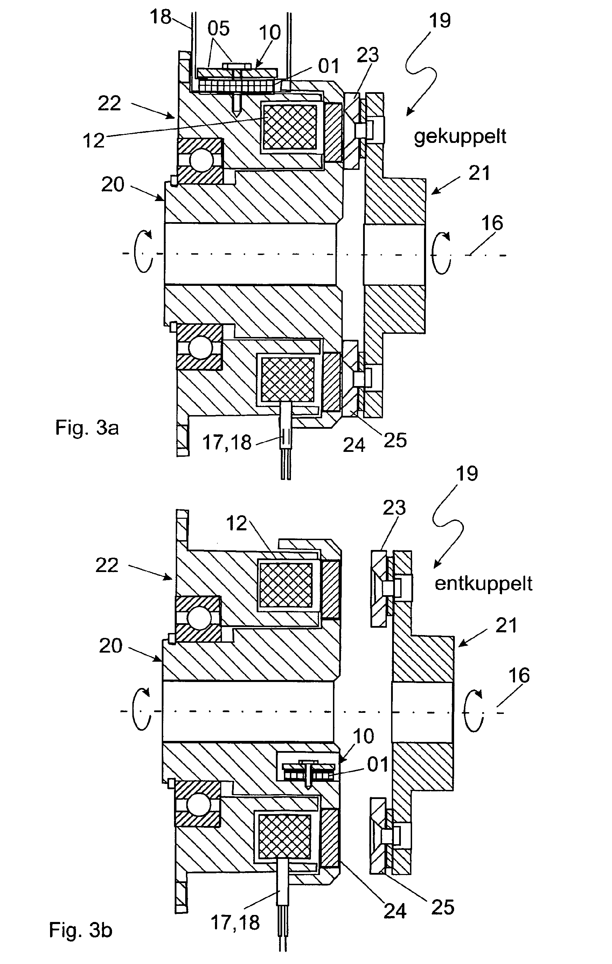

In der Fig. 3 ist anlehnend an die in Fig. 2 dargestellte Bremse 11 in einer vergleichbaren Schnittdarstellung eine elektromagnetische Kupplung 19 dargestellt. Die Kupplung 19 besteht aus einem feststehenden Kupplungsaktuator 22, einer ersten rotierenden Einheit 20, die durch ein Lager, in dem Kupplungsaktuator 22 drehbar gelagert und mechanisch verbunden ist und einer zur ersten rotierenden Einheit 20 axial beabstandeten zweiten rotierenden Einheit 21. Die beiden rotierenden Einheiten 20, 21 sind axial benachbart auf der Drehachse 16 angeordnet, wobei die zweite rotierende Einheit 21 ein axiales Spiel aufweist und durch Kupplungsbeläge 23 kraftschlüssig mit der ersten rotierenden Einheit 20 bei Aktivierung des Elektromagneten 12 durch die anziehenden magnetischen Kräfte verbunden werden kann, bzw. bei ausgeschaltetem Elektromagneten 12 durch Federkräfte von der ersten rotierenden Einheit 20 getrennt werden kann. Der Kupplungsaktuator 22 umfasst den ringförmigen Elektromagneten 12, der mit einer Zuleitung 17 mit einer nicht dargestellten Kupplungssteuerung verbunden ist. Die erste rotierende Einheit 20 weist im Bereich des als offenen Topfmagneten ausgebildeten Bereichs des Kupplungsaktuators 22 einen nichtpermeablen Ring 24 auf, so dass magnetisch gesehen die Einheit aus Kupplungsaktuator 22 und erster rotierender Einheit 20 einen offenen Topfmagneten darstellt. Der Eisenrückschluss des Topfmagneten wird durch den magnetisch hochpermeablen Kupplungsbelag der zweiten rotierenden Einheit 21 gebildet, so dass bei kraftschlüssiger Verbindung der ersten rotierenden Einheit 20 und zweiter rotierender Einheit 21 der Eisenrückschluss des Topfmagneten geschlossen ist.

Wie in Fig. 3a dargestellt ist am Eisenrückschluss des durch Bremsenaktuator 22, erster rotierender Einheit 20 und zweiter rotierender Einheit 21 gebildeten Topfmagneten ein Schaltzustandssensor 10 vorgesehen. In der in Fig. 3a dargestellten Ausführungsform ist der Schaltzustandssensor 10 hierzu am feststehenden Kupplungsaktuator 22 angeordnet. Aufgrund der mechanischen Verbindung des Kupplungsaktuators 22 über das Lager der Drehachse 16 mit der ersten rotierenden Einheit 20 werden die Impulse des Schaltzustandssensors 10 im geöffneten Zustand der Kupplung auf dem aus Kupplungsaktuator 22 und erster rotierender Einheit 20 gebildeten Schwingungskörper 06 übertragen bzw. dessen Eigenfrequenzen und/oder Dämpfungen gemessen. Im geschlossenen Zustand wird der Schwingungskörper 06 aus dem Kupplungsaktuator 22, und der ersten und zweiten rotierenden Einheit 20, 21 gebildet und weist eine wesentlich höhere Dämpfung und niedrigere Eigenfrequenzen als im Fall der offenen Kupplung 19 auf. Die Anordnung des Schaltzustandssensors 10 am feststehenden Kupplungsaktuator 22 hat den Vorteil, dass die Signal- und Ansteuerleitungen des Schaltzustandssensors 10 zur nicht dargestellten Steuer- und Auswerteeinheit 07 konventionell verlegt werden können. Die Ansteuer- und Sensorsignale des Schaltzustandssensors 10 können beispielsweise durch ein geeignetes Modulationsverfahren über die Zuleitung 17 des Elektromagneten 12 übertragen werden, so dass die Zuleitung 17 gleichzeitig als Anschlussleitung 18 für den Schaltzustandssensor 10 dient. Jedoch ist aufgrund der nur indirekten mechanischen Verbindung des Schaltzustandssensors 10 über das Lager der Drehachse 16 zur rotierenden Einheit 20 und zu den Kupplungsscheiben der Einheiten 20, 21 eine hohe Sensitivität und ein kraftvoller Impuls des Schaltzustandssensors 10 erforderlich, um mit genügend hoher Genauigkeit den Schaltzustand der Kupplung 19 zu detektieren.

Wird, wie in Fig. 3a dargestellt, der Elektromagnet 12 bestromt, so bilden sich magnetische Feldlinien dergestalt aus, dass der Eisenkreis über den Bremsenaktuator 22 und die rotierenden Einheiten 20 und 21 geschlossen wird. Hierdurch werden magnetische Kräfte erzeugt, die die beiden rotierenden Einheiten 20, 21 aneinander pressen und so die Kupplung 19 schließen. Bei Beendigung der Bestromung tritt der in Fig. 3b dargestellte Zustand ein, die beiden rotierenden Einheiten 20, 21 werden durch Federkräfte voneinander getrennt und die Kupplung 19 ist entkuppelt. Im Gegensatz zu dem in Fig. 3a dargestellten Ausführungsbeispiel ist der Schaltzustandssensor 10 der in Fig. 3b dargestellten Ausführungsform einer Kupplung 19 in einer Ausnehmung der rotierenden Einheit 20 angeordnet. Somit ist der Schaltzustandssensor 20 mechanisch direkt mit der rotierenden Einheit 20 verbunden, und kann bei geöffneter Kupplung 19 die Einheit 20 als Schwingungskörper 06 bzw. bei geschlossener Kupplung 19 die beiden mechanisch miteinander gekoppelten Einheiten 20 und 21 als Schwingungskörper 06 mit einem mechanischen Impuls anregen bzw. deren Dämpfung und Eigenfrequenzverteilung messen. Durch die direkte mechanische Kopplung des Schaltzustandssensors 10 an die rotierende Einheit 20 ist eine eindeutige und zuverlässige Detektion des Schaltzustands der Kupplung 19 möglich. Problematisch an dieser Anordnung ist jedoch die elektrische Verbindung vom rotierenden Schaltzustandssensor 10 zu der nicht dargestellten Steuer- und Auswerteeinheit 07, um den Schaltzustandssensor 10 einerseits mit Energie zur Erzeugung des mechanischen Impulses zu versorgen und andererseits die Sensorsignale weiterzuleiten. Denkbar sind hierzu eine Signalübertragung über Schleifringe, um den rotierende Schaltzustandssensor 10 elektrisch mit der im feststehenden Teil der Kupplung 19 angeordneten Steuer- und Auswerteeinheit 07 zu verbinden oder andererseits eine Integration eines langlebigen Energiespeichers und einer bidirektionalen Funkübertragungseinrichtung in den Schaltzustandssensors 10, wobei vorteilhafterweise die Steuer- und Auswerteeinheit 07 ebenfalls im Schaltzustandssensor 10 integriert ist. Eine im feststehenden Bereich der Kupplung angeordnete Sende- und Empfangseinheit übernimmt in diesem Fall die Kommunikation mit dem Schaltzustandssensor 10.

In den beiden in Fig. 3a und 3b dargestellten Konfigurationen bewirkt somit eine mechanische Anregung durch den Schaltzustandssensor 10 Eigenfrequenzen im Schwingungskörper der Kupplung 19, die durch Auswertung oder durch Betrachtung des Dämpfungsverhaltens der vom Schaltzustandssensor 10 gelieferten Schwingungssignale präzise, verschleißfrei und zuverlässig den Schaltzustand der Kupplung 19 erkennen lassen.

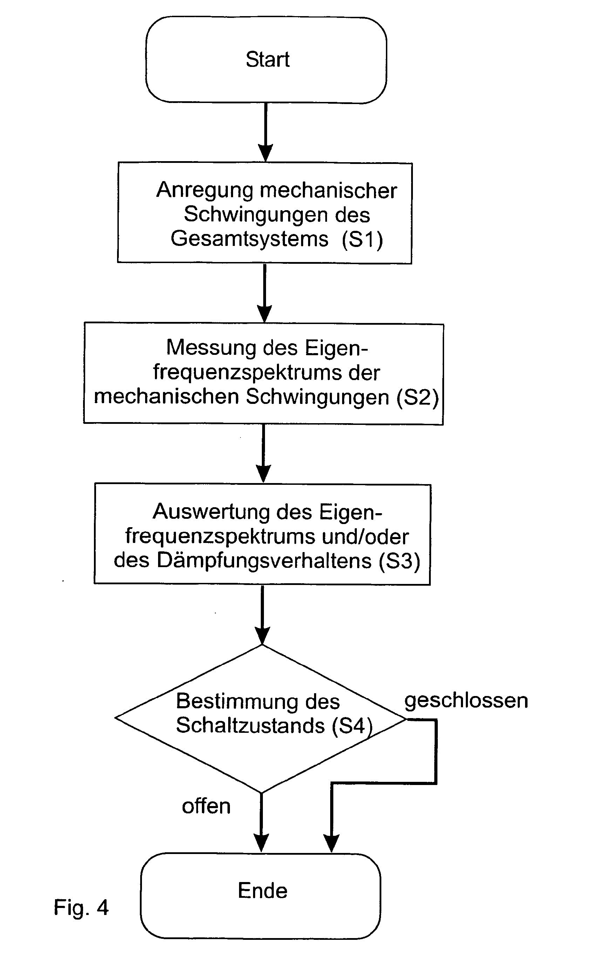

Die Fig. 4 stellt einen Ablaufplan eines Ausführungsbeispiels des erfindungsgemäßen Verfahrens dar. Nach dem Start des Verfahrens steuert die Steuer- und Auswerteeinheit 07 den Schaltzustandssensor 10 so an, dass mittels des Piezoelements 01 mechanische Schwingungen des als Schwingungskörper 06 bezeichneten mechanischen Gesamtsystems erzeugt werden (S1), wobei insbesondere Eigenschwingungen des Gesamtsystems angeregt werden sollen. Dabei ist die mechanische Anregung durch das Piezoelement 01 vorteilhafterweise ein kurzer mechanischer Impuls, um eine möglichst breitbandige Anregung aller möglichen Eigenschwingungen zu erreichen. Nach der Anregung wird das Eigenfrequenzspektrum und/oder die Dämpfungseigenschaft der Schwingungen des Schwingungskörpers 06 mittels des Schaltzustandssensors 10 aufgenommen und diese gemessenen Werte einer Steuer- und Auswerteeinheit 07 zugeführt (S2). Diese nimmt daraufhin eine Auswertung des Eigenfrequenzspektrums und/oder der Dämpfungscharakteristik beispielsweise durch analoge Auswertung oder mittels einer digitalen Signalaufbereitung der Sensorsignale vor (S3). Nach der Auswertung bestimmt die Steuer und Auswerteeinheit 07 den Schaltzustand durch Vergleich der Lage der Eigenfrequenzen mit einer zuvor gespeicherten "idealen" Eigenfrequenzverteilung oder einer Veränderung des Frequenzspektrums bzw. der Dämpfungscharakteristik und beurteilt auf dieser Grundlage den Schaltzustand (S4) der Bremse 11 oder der Kupplung 19. Das Verfahren wird periodisch wiederholend durchgeführt oder bei gezielter Anfrage nach dem Schaltzustand abgearbeitet und ermöglicht somit jederzeit eine Aussage über den aktuellen Schaltzustand der Bremse 11 oder der Kupplung 19, ohne den vorherigen Schaltzustand kennen zu müssen. Das Verfahren bietet den Vorteil einer jederzeit abfragbaren, verschleiss- und wartungsfreien Sensorbestimmung des Schaltzustands eines mechanischen Kraftkopplungssystems. Durch eine genauere Analyse des mechanischen Schwingungssystems können darüber hinaus Aussagen über den Verschleißgrad des Bremsen- oder Kupplungs-Kraftkopplungssystems getroffen werden.

### Bezugszeichenliste

- 01: Piezoelement
- 02: Piezokeramikkörper
- 03: Anschlusselektrode
- 04: Gegenelektrode
- 05: Druckvorspannungseinrichtung
- 06: Schwingungskörper
- 07: Steuer- und Auswerteeinheit
- 08: Schwingungserzeugungseinheit
- 09: Schwingungsanalyseeinheit
- 10: Schaltzustandssensor
- 11: Bremse
- 12: Elektromagnet
- 13: Bremsenaktuator
- 14: Rotierende Einheit
- 15: Bremsbelag
- 16: Drehachse
- 17: Elektromagnet-Zuleitung
- 18: Piezoelement-Anschlussleitung
- 19: Kupplung
- 20: Rotierende Einheit 1
- 21: Rotierende Einheit 2
- 22: Kupplungsaktuator
- 23: Kupplungsbelag
- 24: Nichtpermeabler Ring
- 25: Eisenrückschluss

## Patentansprüche

1. Vorrichtung zur Bestimmung des Schaltzustands einer mechanischen Kraftübertragungsvorrichtung, die eine Steuer- und Auswerteeinheit (07) umfasst, **dadurch gekennzeichnet dass** sie weiterhin zumindest einen Schwingungserreger und zumindest einen Schwingungssensor umfasst, wobei der Schwingungserreger und der Schwingungssensor im Bereich eines spezifischen Schwingungskörpers (06) der mechanischen Kraftübertragungsvorrichtung angeordnet sind, und dass die Steuer- und Auswerteeinheit (07) zur Bestimmung des Schaltzustands so mit dem Schwingungserreger und dem Schwingungssensor elektrisch verbunden ist, dass der Schwingungserreger durch die Steuer- und Auswerteeinheit (07) in mechanische Schwingungen versetzt wird und hierdurch den Schwingungskörper zu Eigenschwingungen anregt, und die von dem Schwingungssensor aufgenommenen mechanischen Schwingungen des Schwingungskörpers zur Beurteilung des Schaltzustands aufgenommen und von der Steuer- und Auswerteeinheit (07) verarbeitet werden.

2. Vorrichtung nach Anspruch 1, **dadurch gekennzeichnet, dass** die mechanische Kraftübertragungsvorrichtung eine Bremse (11) ist.

3. Vorrichtung nach Anspruch 1, **dadurch gekennzeichnet, dass** die mechanische Kraftübertragungsvorrichtung eine Kupplung (19) ist.

4. Vorrichtung nach einem der vorangegangenen Ansprüche, **dadurch gekennzeichnet, dass** die mechanische Kraftübertragungsvorrichtung elektromagnetisch betätigbar ist und hierzu mindestens einen Elektromagneten (12) umfasst.

5. Vorrichtung nach Anspruch 4, **dadurch gekennzeichnet, dass** die mechanische Kraftübertragungsvorrichtung mindestens einen Topfmagneten umfasst, wobei der Schwingungserreger und / oder der Schwingungssensor im Bereich des Eisenrückschlusses des Topfmagneten angeordnet ist.

6. Vorrichtung nach einem der vorangegangenen Ansprüche, **dadurch gekennzeichnet, dass** das Schwingungserregungselement und/oder der Schwingungssensor ein Piezoelement (01) ist.

7. Vorrichtung nach Anspruch 6, **dadurch gekennzeichnet, dass** das Piezoelement (01) als Schaltzustandssensor (10) sowohl als Schwingungserreger als auch als Schwingungssensor dient, so dass zunächst das Piezoelement (01) zu Schwingungen angeregt wird, und anschließend die Schwingungen misst.

8. Vorrichtung nach einem der vorangegangenen Ansprüche, **dadurch gekennzeichnet, dass** die Steuer- und Auswerteeinheit (07) eine Schwingungserzeugungseinheit (08) und eine Schwingungsanalyseeinheit (09) umfasst.

9. Vorrichtung nach Anspruch 8, **dadurch gekennzeichnet, dass** die Schwingungsanalyseeinheit des weiteren Mittel zur Bestimmung der Abweichung einzelner Schwingungsfrequenzen bzw. eines Frequenzspektrums umfasst.

10. Vorrichtung nach Anspruch 8 oder 9, **dadurch gekennzeichnet, dass** die Schwingungsanalyseeinheit (09) in Verbindung mit der Schwingungserzeugungseinheit (08) steht, und die Anregungsfrequenz der Schwingungserzeugungseinheit (08) steuert.

11. Vorrichtung nach einem der Ansprüche 8 bis 10, **dadurch gekennzeichnet, dass** die Schwingungsanalyseeinheit neben einem Mittel zur Signalisierung des Schaltzustands mindestens ein weiteres Mittel zur Signalisierung des Abnutzungsgrads der mechanischern Kraftübertragungsvorrichtung umfasst.

12. Vorrichtung nach einem der vorangegangenen Ansprüche 4 bis 11, **dadurch gekennzeichnet, dass** der Schwingungserreger und/oder der Schwingungssensor über die Zuleitungen der Elektromagnete mit der Steuer- und Auswerteeinheit (07) verbunden sind.

13. Verfahren zur Bestimmung des Schaltzustands einer mechanischen
Kraftübertragungsvorrichtung unter Verwendung einer Vorrichtung nach den vorangegangenen Ansprüchen, **dadurch gekennzeichnet, dass** in einem ersten Schritt (S1) die Steuer- und Auswerteeinheit (07) den Schwingunaserreger so in mechanische Schwingungen versetzt, dass der Schwingungskörper (06) zu Eigense so in mechanische schwingungen versetzt schwingungen angeregt wird; in einem zweiten Schritt (S2) die Steuer- und Auswerteeinheit (07) die Schwingungen des Schwingungssensors misst;
in eine dritten Schritt die Steuer- und Auswerteeinheit (07) das Eigenfrequenzspektrum der Schwingungen bestimmt und auswertet;
und in einem vierten Schritt (S4) die Steuer- und Auswerteeinheit (07) auf Basis des Frequenzspektrums den Schaltzustand der Kraftübertragungsvorrichtung bestimmt und signalisiert.

14. Verfahren nach Anspruch 13, **dadurch gekennzeichnet, dass** die Steuer- und Auswerteeinheit (07) in einem weiteren Schritt aufgrund einer Abweichung des Frequenzspektrums von einem Referenzfrequenzspektrum den Verschleißgrad der Kraftübertragungsvorrichtung feststellt und signalisiert.

15. Verfahren nach Anspruch 4 und 13, **dadurch gekennzeichnet, dass** die Steuer- und Auswerteeinheit (07) unter Berücksichtigung des Betriebszustands des Elektromagnets (12) und des Ergebnisses der Beurteilung des Schaltzustands der Kraftübertragungsvorrichtung ein Warnsignal ausgibt.

## Claims

1. A device for determining the switch state of a mechanical power transmission device which comprises a control and evaluation unit (07), **characterised in that** it further comprises at least one vibration exciter and at least one vibration sensor, the vibration exciter and the vibration sensor being disposed in the region of a specific vibration body (06) of the mechanical power transmission device and that the control and evaluation unit (07) is electrically connected to the vibration exciter and the vibration sensor in order to determine the switch state in such a way that the vibration exciter is displaced into mechanical vibrations by the control and evaluation unit (07) and in this way excites the vibration body into natural vibrations, and the mechanical vibrations of the vibration body received by the vibration sensor are received for estimating the switch state and are processed by the control and evaluation unit (07).

2. The device according to Claim 1, **characterised in that** the mechanical power transmission device is a brake (11).

3. The device according to Claim 1, **characterised in that** the mechanical power transmission device is a coupling (19).

4. The device according to any of the preceding claims, **characterised in that** the mechanical power transmission device can be operated electromagnetically and for this purpose comprises at least one electromagnet (12).

5. The device according to Claim 4, **characterised in that** the mechanical power transmission device comprises at least one pot magnet, the vibration exciter and/or the vibration sensor being disposed in the region of the back iron of the pot magnet.

6. The device according to any of the preceding claims, **characterised in that** the vibration excitation element and/or the vibration sensor is a piezo element (01).

7. The device according to Claim 6, **characterised in that** the piezo element (01) as a switch state sensor (10) serves both as a vibration exciter and as a vibration sensor so that the piezo element (01) is initially excited into vibrations and then measures the vibrations.

8. The device according to any of the preceding claims, **characterised in that** the control and evaluation unit (07) comprises a vibration generation unit (08) and a vibration analysis unit (09).

9. The device according to Claim 8, **characterised in that** the vibration analysis unit further comprises means for determining the deviation of individual vibration frequencies and of a frequency spectrum.

10. The device according to Claim 8 or 9, **characterised in that** the vibration analysis unit (09) is connected to the vibration generation unit (08) and controls the excitation frequency of the vibration generation unit (08).

11. The device according to any of Claims 8 to 10, **characterised in that** the vibration analysis unit comprises in addition to a means for signalling the switch state at least one further means for signalling the degree of wear of the mechanical power transmission device.

12. The device according to any of the preceding Claims 4 to 11, **characterised in that** the vibration exciter and/or the vibration sensor are connected via the feed lines of the electromagnets to the control and evaluation unit (07).

13. A method for determining the switch state of a mechanical power transmission device by using a device according to the preceding claims, **characterised in that** in a first step (S1) the control and evaluation unit (07) displaces the vibration exciter (01) into mechanical vibrations such that the vibration body (06) is excited into natural vibrations;
in a second step (S2) the control and evaluation unit (07) measures the vibrations of the vibration sensor;
in a third step the control and evaluation unit (07) determines and evaluates the natural frequency spectrum of the vibrations;
and in a fourth step (S4) the control and evaluation unit (07) determines and signals the switch state of the power transmission device upon the basis of the frequency spectrum.

14. The method according to Claim 13, **characterised in that** in a further step the control and evaluation device (07) determines and signals the degree of wear of the power transmission device upon the basis of a deviation of the frequency spectrum from a reference frequency spectrum.

15. The method according to Claims 4 and 13, **characterised in that** the control and evaluation unit (07) issues a warning signal taking into account the operating state of the electromagnet (12) and the result of the estimation of the switch state of the power transmission device.

## Revendications

1. Dispositif de détermination de l'état de commutation d'un dispositif de transmission mécanique comprenant une unité de commande et d'exploitation (07), **caractérisé en ce qu'**il comprend en outre au moins un oscillateur et au moins un capteur d'oscillation, dans lequel l'oscillateur et le capteur d'oscillations sont aménagés dans la zone d'un corps oscillant (06) du dispositif de transmission mécanique et **en ce que** l'unité de commande et d'exploitation (07) est connectée, pour déterminer l'état de commutation, à l'oscillateur et au capteur d'oscillations de sorte que l'oscillateur soit déplacé par l'unité de commande et d'exploitation (07) en oscillations mécaniques et, par suite, soumette le corps oscillant à des oscillations propres, les oscillations mécaniques du corps oscillant étant reçues par le capteur d'oscillations pour apprécier l'état de commutation et étant traitées par le dispositif de commande et d'exploitation (07).

2. Dispositif selon la revendication 1, **caractérisé en ce que** le dispositif de transmission mécanique est un frein (11).

3. Dispositif selon la revendication 1, **caractérisé en ce que** le dispositif de transmission mécanique est un embrayage (19).

4. Dispositif selon l'une quelconque des revendications précédentes **caractérisé en ce que** le dispositif de transmission mécanique peut être commandé par voie électromagnétique et comprend à cet effet au moins un électroaimant (12).

5. Dispositif selon la revendication 4, **caractérisé en ce que** le dispositif de transmission mécanique comprend au moins un aimant cuirassé, dans lequel l'oscillateur et/ou le capteur d'oscillations est ou sont aménagés dans la zone de la culasse de l'aimant cuirassé.

6. Dispositif selon l'une quelconque des revendications précédentes, **caractérisé en ce que** l'élément oscillateur et/ou le capteur d'oscillations est ou sont un élément piézoélectrique (1).

7. Dispositif selon la revendication 6, **caractérisé en ce que** l'élément piézoélectrique (01) sert de capteur d'état de commutation (10) autant comme oscillateur que comme capteur d'oscillations de sorte que, tout d'abord, l'élément piézoélectrique (01) soit soumis à des oscillations et, ensuite, mesure les oscillations.

8. Dispositif selon l'une quelconque des revendications précédentes, **caractérisé en ce que** l'unité de commande et d'exploitation (07) comprend une unité de production d'oscillations (08) et une unité d'analyse d'oscillations (09).

9. Dispositif selon la revendication 8, **caractérisé en ce que** l'unité d'analyse d'oscillations comprend par ailleurs des moyens pour déterminer l'écart de fréquences d'oscillation (09) individuelles ou d'un spectre de fréquences.

10. Dispositif selon la revendication 8 ou 9, **caractérisé en ce que** l'unité d'analyse d'oscillations (09) est connectée à l'unité de production d'oscillations (08) et commande la fréquence d'excitation de l'unité de production d'oscillations (08).

11. Dispositif selon l'une quelconque des revendications 8 à 10, **caractérisé en ce que** l'unité d'analyse d'oscillations comprend, à côté d'un moyen de signalisation de l'état de commutation, au moins un autre moyen de signalisation du degré d'usure du dispositif de transmission mécanique.

12. Dispositif selon l'une quelconque des revendications 4 à 11, **caractérisé en ce que** l'oscillateur et/ou le capteur d'oscillations est ou sont connectés à l'unité de commande et d'exploitation (07) via les lignes d'alimentation de l'électroaimant.

13. Procédé de détermination de l'état de commutation d'un dispositif de transmission mécanique en utilisant un dispositif selon les revendications précédentes, **caractérisé en ce que**, dans une première étape (S1), l'unité de commande et d'exploitation (07) déplace l'oscillateur en oscillations mécaniques de sorte que le corps oscillant (06) soit soumis à des oscillations propres ; dans une deuxième étape (S2), l'unité de commande et d'exploitation (07) mesure les oscillations du capteur d'oscillations ; dans une troisième étape (S3), l'unité de commande et d'exploitation (07) détermine et exploite le spectre de fréquences propres des oscillations ; et, dans une quatrième étape (S4), l'unité de commande et d'exploitation (07) détermine et signalise l'état de commutation du dispositif de transmission sur la base du spectre de fréquences.

14. Procédé selon la revendication 13, **caractérisé en ce que** l'unité de commande et d'exploitation (07) établit et signalise le degré d'usure du dispositif de transmission sur la base d'un écart du spectre de fréquences par rapport à un spectre de fréquences de référence.

15. Procédé selon les revendications 4 et 13, **caractérisé en ce que** l'unité de commande et d'exploitation (07) délivre un signal d'avertissement en tenant compte de l'état de fonctionnement de l'électroaimant (12) et du résultat de l'appréciation de l'état de commutation du dispositif de transmission.
